# FASCICULE DE BREVET EUROPEEN

(11) **EP 0 737 599 B1**
(45) Date de publication et mention de la délivrance du brevet: **05.08.1998**
(21) Numéro de dépôt: 95440015.6
(22) Date de dépôt: 12.04.1995
(51) Int. Cl.: B60P 3/025

(54) **Remorque transformable en scène**
In eine Bühne umwandelbarer Anhänger
Trailer convertible into a stage

(43) Date de publication de la demande: 16.10.1996
(73) Titulaire: S.A. GUILLET, F-67127 Molsheim Cedex (FR)
(72) Inventeur: Guillet, Gilles, F-67380 Lingolsheim (FR)
(74) Mandataire: Littolff, Denis

(56) Documents cités:
- DE-A- 4 017 372
- FR-A- 2 615 461
- US-A- 5 152 109

## Description

La présente invention concerne un véhicule de type remorque pouvant être transformé en un espace scénique développé à partir de l'enveloppe initiale dudit véhicule, ainsi qu'un procédé de montage rapide dudit espace scénique à l'aide d'un personnel minimal.

L'une des caractéristiques du véhicule de l'invention est que le toit de la remorque, monté sur au moins deux mâts localisés aux deux extrémités de la remorque, peut être manoeuvré en même temps que des parties des façades latérales. Plus précisément, une unique commande, de préférence bilatérale, associe le relèvement du toit et le basculement de deux pans latéraux destinés à compléter le plancher permanent de la remorque, dans le but d'augmenter sa surface.

Une telle caractéristique a déjà été divulguée partiellement, dans le certificat d'addition référencé FR-A-2 615 461, qui décrit un véhicule pouvant donner lieu à un espace scénique développable comportant des moyens pour associer le relevage de la couverture dudit véhicule et le basculement d'une seule paroi latérale, celle qui est située du côté de l'auvent d'avant-scène, laquelle constitue en fait le plancher avant articulé sur le plancher central.

La première différence avec l'invention réside dans l'unilatéralité du développement possible, pour ce qui concerne l'ouverture de l'espace scénique au public et le déploiement des auvents. Dans le véhicule selon la présente invention, le développement est symétrique et comporte une double augmentation de surface de plancher, et un double déploiement d'auvent. Ce dernier est au surplus réglable unilatéralement, de manière à permettre un relèvement supplémentaire côté public dans le cas d'un concert ou équivalent.

En outre, dans l'art antérieur, le moyen pour réaliser à la fois le relevage de la couverture et le basculement d'une paroi latérale comprend classiquement des vérins d'extrémité, dont la commande est probablement automatisée, bien que le texte soit silencieux sur ce point. Ces vérins doivent en tout cas être des vérins de puissance, pour pouvoir déplier une structure telle que celle qui est décrite. Une telle disposition fait appel à des composants compliquant le système, notamment lors de problèmes de fonctionnement. Sa complexité peut entraîner des problèmes de maintenance et nécessite un personnel formé et / ou spécialisé.

Dans le brevet US-A-5 152 109, un système contrôle le mouvement de la toiture et un autre système, totalement indépendant du premier, commande le basculement des pans latéraux pour former le plancher de la scène. Ce dernier système est d'ailleurs lui aussi réalisé à l'aide de vérins classiques, coûteux en poids pour la structure. Il ne s'agit donc pas d'un système manuel.

Les deux mouvements de la toiture et des éléments de scène sont donc contrôlés séparément, notamment du fait de la structure du système lever came rotatif sur lequel pivotent deux jambes de force qui pivotent à leur autre extrémité sur les pans latéraux du toit. Lorsqu'on déplie la structure, le levier came tourne pour aboutir au déploiement du toit, ce dernier subissant une élévation à l'aide d'un système à vis sans fin installé dans chaque mât d'extrémité.

En ce qui concerne la présente invention, les moyens d'obtenir le déploiement de l'espace scénique sont essentiellement manuels, et sont réalisés à l'aide de manivelles contrôlant l'ensemble du mouvement notamment, mais non exclusivement, à l'aide de vérins coupés à un système à câbles / poules, selon une configuration très particulière dont la description détaillée sera donnée dans la suite.

L'avantage majeur de cette conception est de ne pas exiger des monteurs l'accomplissement d'efforts pendant l'opération de déployage, compte tenu que le principe général qui a présidé à la conception d'ensemble est de permettre le montage très rapide de toute la scène à l'aide d'un personnel très réduit.

A titre d'exemple, la scène peut être entièrement déployée en un quart d'heure par deux hommes. Il va de soi que, pour obtenir un tel résultat, il faut d'une part que les efforts impliqués dans l'opération de déploiement soit minimisés, et que l'ensemble des opérations à effectuer soit d'autre part simplifié à l'extrême. Toute la conception objet de la présente invention repose donc sur ce double objectif.

Elle permet de mettre en oeuvre le procédé de montage faisant également l'objet de la présente invention, comprenant une succession d'étapes particulièrement simples et rapides à réaliser, à la portée de tout utilisateur. Le véhicule de l'invention a été conçu de telle sorte que n'importe qui puisse procéder à son déploiement sans savoir-faire particulier : une seule démonstration suffit en général pour faire comprendre correctement l'ordre des manoeuvres à effectuer.

La maintenance n'exige pas non plus de savoir-faire spécifique et ne constitue en tout état de cause pas un problème majeur, du fait de la robustesse née de la simplification volontaire des composants. Il n'est donc nul besoin de former un technicien dans les lieux d'utilisation des véhicules de l'invention.

Enfin, ces caractéristiques ne peuvent être mises en oeuvre que parce que les structures des parties mobiles sont allégées à l'extrême, du fait du matériau employé et de la conception spécifique desdites structures.

Les véhicules de l'invention comprennent un châssis allongé recouvert d'un plancher central, une toiture centrale fixée à au moins deux mâts télescopiques situés aux deux extrémités longitudinales du véhicules, deux façades latérales composées d'au moins deux pans dont l'un est articulé au niveau de l'arête longitudinale supérieure et l'autre est articulé au niveau de l'arête longitudinale latérale inférieure, et ils comportent des moyens d'associer le relèvement du toit et le basculement d'au moins un pan de chaque façade latérale longitudinale.

Lesdits moyens comprennent deux systèmes mécaniques associés à deux phases séquentielles de déploiement du véhicule, un premier système mécanique amorçant simultanément l'agrandissement des poteaux télescopiques et le basculement latéral d'au moins deux pans symétriques, et un second système mécanique achevant l'agrandissement des poteaux télescopiques et le basculement simultané desdits pans latéraux jusqu'à atteindre l'horizontalité, lesdits systèmes étant commandés par au moins un organe de commande manuel réglant l'amplitude du mouvement généré séquentiellement par les deux systèmes à chaque manipulation.

Selon une configuration préférentielle, lesdits moyens permettant d'associer simultanément le relèvement de la toiture centrale et le basculement des pans latéraux sont situés dans les mâts télescopiques d'extrémité. Ils ne concernent au surplus que les pans latéraux inférieurs, la commande du pivotement des pans latéraux supérieurs étant réalisée par d'autres moyens.

Lesdits mâts télescopiques d'extrémité comprennent un poteau fixé au châssis de la remorque et un coulisseau mobile dans ledit poteau fixe, lequel comprend à sa partie supérieure un ensemble de deux poules et de deux plots fixes disposés symétriquement par rapport à l'axe du mât, le coulisseau comprenant en outre un jeu de deux poulies coaxiales tournant autour d'un axe situé au niveau de sa partie inférieure.

A ces éléments s'ajoutent avantageusement deux câbles disposés également symétriquement par rapport à l'axe du mât télescopique, et qui relient les points ou plots fixes du poteau aux pans latéraux inférieurs basculants, via respectivement une desdites poulies du coulisseau et la poulie située en face dudit pot fixe par rapport à l'axe de symétrie mentionné auparavant.

Ces éléments forment en réalité tout ou partie des deux systèmes mécaniques associés aux deux phases séquentielles du déploiement du volume scénique à partir de la remorque repliée.

Plus précisément, le premier système mécanique amorçant le mouvement simultané de basculement des pans latéraux inférieurs et de levage de la toiture centrale comporte d'une part les deux câbles reliant les pots fixes aux parts latéraux via lesdites poulies et d'autre part un dispositif du type ressort exerçant une force de rappel vers le haut et placé sous le coulisseau.

Ce dispositif de type ressort est de préférence un vérin à gaz: dont le travail s'exprime par une tendance constante à l'expansion du gaz, provoquant un effort orienté selon l'axe du mât et vers le haut, c'est-à-dire dans le sens du dépliement du coulisseau, qui est poussé à s'extraire du poteau fixe.

Selon une spécificité de l'invention, le second système mécanique comporte uniquement les deux câbles reliant les plots fixes du poteau fixe aux parts latéraux inférieurs via les poulies du coulisseau et les poulies dudit poteau.

Ce second système fonctionne grâce aux forces de gravité s'exerçant sur les deux parts latéraux au cours de leur basculement. Du point de vue mécanique, cette solution est particulièrement remarquable par sa simplicité et sa robustesse. Elle s'avère au surplus très judicieuse, par le gain d'énergie qu'elle procure à l'utilisateur et parce qu'elle supprime tout besoin en une autre source d'énergie, nécessairement coûteuse.

Pour résumer, le premier système mécanique donne l'impulsion nécessaire à amorcer le mouvement, et agit pendant une amplitude déterminée au début du mouvement, tandis que le second système prend le relais pour achever le mouvement.

D'un point de vue strictement structurel, le second système est inclus dans le premier, lequel comporte cependant un composant supplémentaire. D'un point de vue analytique, les deux systèmes sont cependant bien différenciés, ne serait-ce que par les incidences d'application des sources d'énergie utilisées.

Compte tenu de la permanence des potentiels énergétiques dans certaines positions données (au début du cycle pour le vérin, en milieu et fin de cycle de déploiement pour le champ gravitationnel), il faut un moyen de contrôle agissant pour réguler ce mouvement. Il s'agit en l'occurrence d'un organe de commande manuel.

Cet organe de commande manuel est une manivelle actionnant une roue à rochets sur laquelle est en prise une chaîne dont l'une des extrémités est fixée à la partie inférieure du coulisseau.

L'utilisateur dépense une énergie minimale à chaque manipulation de la manivelle, du fait du travail en traction de la chaîne, lequel est constant puisque les potentiels d'énergie des deux systèmes mécaniques s'appliquent séquentiellement et à tout moment dans le sens d'un déplacement automatique qu'il faut contrôler, voire refréner, sans quoi l'ouverture serait rapide et brutale.

Pour assurer la sécurité du montage déployé, le coulisseau est verrouillé dans ses deux positions extrêmes à l'aide d'une goupille coopérant avec des orifices du poteau et des orifices du coulisseau, lorsqu'ils parviennent en face les uns des autres, c'est-à-dire en début et fin du mouvement.

De la sorte, si la chaîne ou un autre élément mécanique de l'organe de contrôle manuel venait à céder lorsque l'ensemble de la remorque est en position repliée, il n'y aurait pas de déploiement intempestif. A l'inverse, personne ne peut procéder au repliage des pans latéraux inférieurs et à l'abaissement simultané de la toiture centrale sans avoir préalablement enlevé la goupille de sécurité des mâts centraux.

Selon l'invention, et d'une manière particulièrement avantageuse, les pans latéraux supérieurs sont fixés à l'arête longitudinale latérale supérieure de la toiture centrale au moyen d'un système permettant d'absorber des efforts dont au moins une des composantes est située dans le plan desdits pans latéraux supérieurs.

Cette caractéristique est extrêmement importante et intéressante car la scène, en position déployée, comprend une grande surface de bâchage accessible à des efforts tels que ceux véhiculés par le vent, qui reste le grand ennemi de ce type de structures à vastes surfaces toilées ou bâchées.

Dans la configuration de l'invention, la composante parallèle à ladite surface est complètement absorbée par le système de l'invention, ce qui réduit considérablement les effets globaux de ces efforts et les rendent maîtrisables. Ledit système est intégré aux tubulures formant la charpente des divers composants de la remorque, laquelle est en fait une structure formée de profilés ou tubes métalliques recouverts d'un plancher en bois ou d'un bâchage en toile, selon qu'il s'agit d'un plancher ou du plafond.

Selon l'invention, le système de l'invention visant à l'absorption de ces contraintes comprend d'une part des tubulures articulées à l'arête longitudinale latérale de la toiture centrale, dotées de deux lumières longitudinales se faisant face et d'autre part des ressorts placés dans des tubes desdits pans latéraux dans lesquelles s'ajustent lesdites tubulures articulées, lesdits ressorts venant en butée à l'une de leurs extrémités contre l'extrémité des tubulures articulées et à l'autre de leurs extrémités contre une butée interne au tube, la liaison entre les tubulures articulées et les tubes des pans latéraux étant réalisée à chaque liaison à l'aide d'un arbre transversal fixé audit tube coulissant dans lesdites lumières.

La vocation première de cette remorque étant d'être déployée en une scène, il est nécessaire que des réglages puissent avoir lieu, de manière par exemple à pouvoir dégager l'avant-scène alors que la partie arrière demeure plus protégée par la surface bâchée du pan supérieur opposé.

A cet effet, de chaque côté de la remorque, les coins externes du pan supérieur et les coins externes du pan inférieur de la même façade latérale sont reliés par des poteaux télescopiques dont la taille est réglable à l'aide d'un système à câble et au moins une poule opérable manuellement par exemple au moyen d'une manivelle coopérant avec une roue à rochets.

Lesdits poteaux télescopiques sont avantageusement fixés à l'aide de goupilles coopérant avec des orifices situés d'une part à ses extrémités et d'autre part dans des logements correspondants des pans latéraux.

On a dit précédemment qu'un des avantages principaux de l'invention est de ne pas exiger d'efforts importants de la part des monteurs. Ceci est notamment rendu possible par la légèreté des structures de la toiture centrale et des pans latéraux qui sont réalisés en poutrelles d'aluminium, de sorte que les deux systèmes mécaniques étudiés précédemment peuvent être conçus avec des composants légers et standards.

Seul le plateau fixe, sur lequel reposent ou sont articulés les autres éléments, est en acier. Un avantage subséquent de cette structure est son poids total qui ne dépasse jamais 3,5 T (3.500 kg) et ne nécessite par conséquent pas de permis de conduire spécial. On reste dans la catégorie de permis réservée aux véhicules légers (VL), et le poids total permet d'utiliser des véhicules tels que de 4 x 4 standards, ou des fourgons classiques, pour remorquer le podium mobile de l'invention.

En outre, comme on l'a vu, le procédé de montage est particulièrement remarquable par sa simplicité et sa rapidité. Il ne nécessite aucune connaissance particulière et peut être compris par tout un chacun.

Il se caractérise par les étapes successives suivantes :
- pour une première façade latérale, décrochage de deux poteaux télescopiques repliés arrimés au châssis, basculement manuel du pan supérieur de ladite façade latérale vers le haut, maintien dudit pan en position relevée à l'aide desdits poteaux de coin disposés sensiblement verticalement sur le sol et fixés aux deux coins extérieurs du pan à relever,
- opération similaire sur la deuxième façade latérale,
- relevage de la toiture centrale et basculement simultané des deux pans inférieurs vers une position horizontale,
- soutènement du pan inférieur à l'aide de supports posés sur le sol et fixés audit pan inférieur,
- fixation des extrémités inférieures des poteaux télescopiques soutenant le pan supérieur formant auvent latéral sur les coins extérieurs du pan inférieur horizontal,
- mêmes opérations sur la seconde façade latérale,
- relevage desdits poteaux télescopiques de coin,
- même opération sur la seconde façade latérale.

Ceci peut être réalisé en à peu près un quart d'heure par deux personnes. Dans le procédé de l'invention défini ci-dessus, dans la cohérence avec le dispositif décrit auparavant, le relevage de la toiture centrale et le basculement simultané des pans latéraux inférieurs sont réalisés manuellement à l'aide de manivelles commandant l'amplitude du mouvement généré à chaque manipulation, et situées à la partie inférieure de chaque mât télescopique.

Selon une particularité de l'invention, afin d'assurer d'une part la sécurité du montage et d'augmenter d'autre part la rapidité d'installation, les fixations des supports de soutènement des pans latéraux inférieurs en position horizontale, des poteaux télescopiques de coins à leurs extrémités inférieures et supérieures et des coulisseaux de tous les poteaux et mâts télescopiques dans leurs positions extrêmes sont réalisés par goupillage.

L'ensemble des caractéristiques de dispositif et de procédé décrites auparavant ont pour aboutissement un podium mobile bon marché, léger, facile et rapide à construire et à déplacer.

On va maintenant le décrire plus en détail en se référant aux figures annexées, pour lesquelles :
- La figure 1 est une vue de face de la structure de la remorque, sans les pans latéraux ;
- La figure 2 est une vue de dessus de la charpente métallique du plancher central et des deux pans inférieurs latéraux basculés pour augmenter la surface de plancher ;
- La figure 3 est une vue de côté schématique de la remorque repliée, avec les deux paires de pans inférieurs et supérieurs rabattus ;
- La figure 4 est une vue de côté schématique de la remorque déployée en structure scénique ;
- La figure 5a est une vue de face du dispositif combinant le basculement des pans latéraux et le levage du coulisseau ;
- La figure 5b est une vue de côté du même dispositif ;
- La figure 6 représente le système permettant d'absorber les contraintes de tension du bâchage ;
- La figure 7 est une vue montrant une phase intermédiaire du déploiement, permettant d'éclairer le procédé de montage rapide de l'invention ; et
- La figure 8 est une perspective de l'ensemble de la remorque repliée tractée par un véhicule du type à quatre roues motrices.

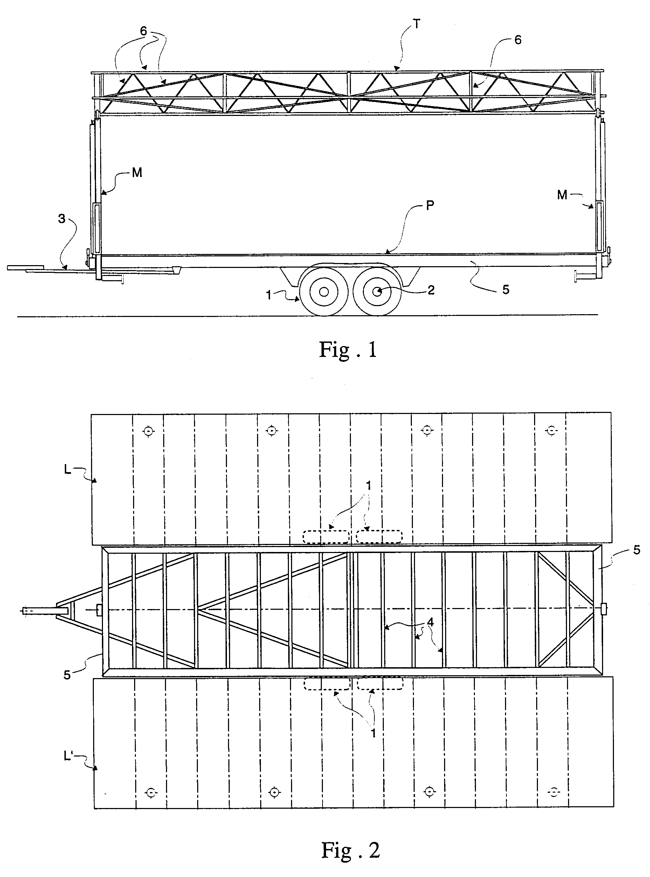

La figure 1 représente le type de remorque pouvant se transformer en podium mobile selon l'invention. Outre les caractéristiques traditionnelles de ce type de véhicule, telles que roues (1), essieux (2), moyens d'accrochage (3) au véhicule tracteur etc ... sur lesquelles on ne s'arrêtera pas, ce véhicule comporte schématiquement un plancher central (P) et une toiture centrale (T) reposant sur des mâts d'extrémité (M).

Comme on l'a dit, le plancher central (P) est constitué d'un châssis fait de profilés métalliques (4) assemblés (particulièrement visible en figure 2) à un cadre (5) périphérique, le tout étant de préférence construit en acier et recouvert d'un plancher (P) en bois.

A l'inverse, tous les éléments mobiles, tels que la toiture centrale (T), ou les planchers latéraux (L, L'), sont constitués en tubulures et / ou profilés en aluminium (6), et sont par conséquent beaucoup plus légers.

Ces structures sont connues en soi, et résultent par exemple de nécessités fonctionnelles et / ou des calculs de la structure globale en fonction des contraintes établies par le cahier des charges. En particulier, certains des réseaux de tubulures et / ou de profilés métalliques sont destinés à être recouverts d'une bâche qu'ils doivent supporter, d'où une contrainte de forme, et qui est susceptible de créer des contraintes pendant l'utilisation, d'où des nécessités techniques.

La figure 2 montre le cadre (5) et les poutrelles (4) supports du plancher principal (P), lequel n'est pas représenté, alors qu'elle représente les planchers latéraux (L, L') sans représenter les structures qui les supportent, lesquelles ne sont pas nouvelles en soi, et ne sont intéressantes dans le cadre de l'invention qu'à un titre qui sera développé plus en détail ci-après dans le texte.

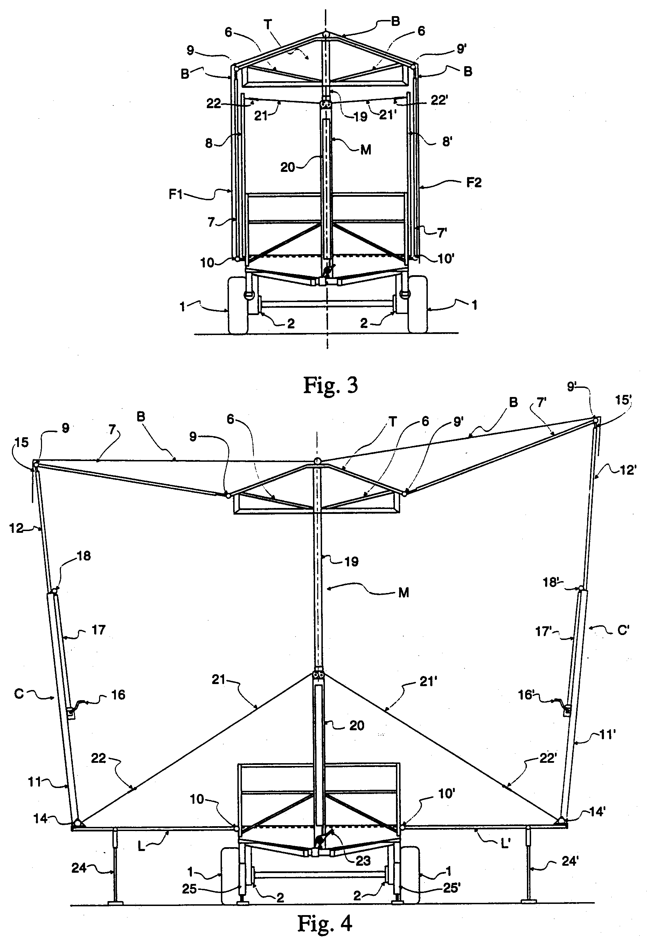

Lorsqu'elle est complète, la structure de l'invention peut être déployée ou repliée. C'est ce que représentent respectivement les figures 4 et 3, dans lesquelles les façades latérales (F1) et (F2) sont figurées dans leurs deux positions extrêmes. La figure 3 montre particulièrement bien la configuration superposée des deux pans supérieurs et inférieurs desdites façades (F1) et (F2), au surplus recouverts d'une bâche (B). En réalité, seuls les pans supérieurs (7, 7') sont bâchés, mais ils recouvrent les pans inférieurs (8, 8') jusqu'au niveau du plancher (P) du véhicule. De la sorte, en position repliée, l'ensemble du volume de la remorque est bâché.

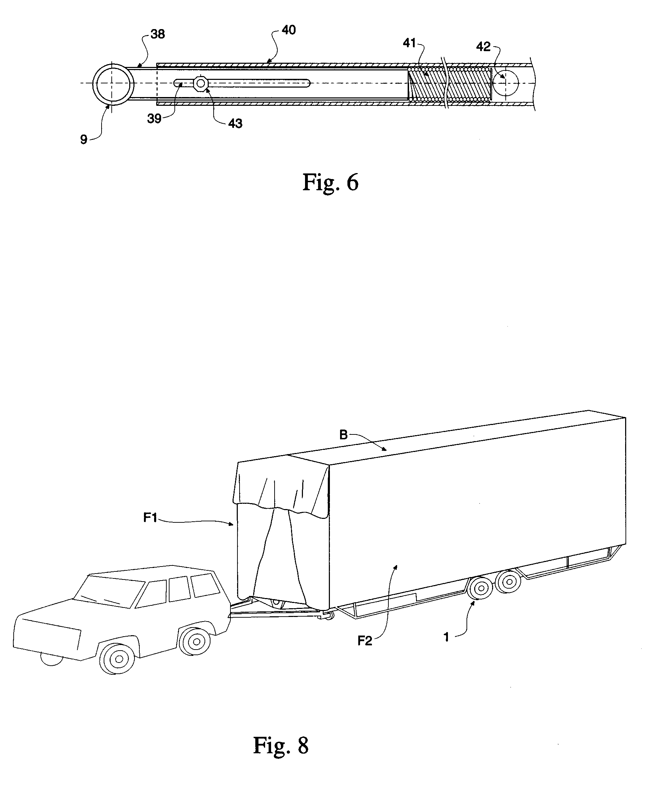

Comme on l'a dit, les pans supérieurs (7, 7') sont articulés autour d'une poutrelle située au niveau de l'arête longitudinale latérale supérieure (9, 9') du volume, alors que les pans inférieurs (8, 8') sont articulés au niveau de l'arête longitudinale latérale inférieure (10, 10'). La structure précise de ces articulations, connue en soi, n'apparaît que schématiquement sur ces figures. Des détails supplémentaires quant aux articulations (9, 9') seront cependant données en figure 6.

En figure 4, la structure déployée comprend en outre des poteaux télescopiques de coins (C, C') dotés d'un poteau principal (11, 11') et d'un coulisseau (12, 12') actionné à l'aide d'un système à manivelle, poulie et câble connu en soi. Ces poteaux (C, C') sont fixés, en configuration repliée, au châssis de cadre (5) lorsque le volume n'est pas déployé. Ils permettent un réglage distinct de l'ouverture de chaque façade latérale. Ainsi, la figure 4 représente une structure de scène ouverte vers le public à son côté droit, plus déployé, alors que l'arrière de la scène est côté gauche. Ces poteaux (C, C') sont goupillés aux extrémités inférieure (14, 14') et supérieure (15, 15').

Le système de levage du coulisseau comporte une manivelle classique (16, 16') reliée à une roue enroulant un câble (17, 17') passant par une poulie (18, 18') située, ainsi qu'un point fixe auquel est solidarisée l'autre extrémité du câble (17, 17'), en partie supérieure du poteau (11, 11'). D'une manière connue en soi, le câble (17, 17') passe au voisinage de l'extrémité inférieure du coulisseau (12, 12') et le tracte vers le haut à mesure qu'on l'enroule, ou le laisse descendre dans le poteau (11, 11') récepteur à mesure qu'on le déroule.

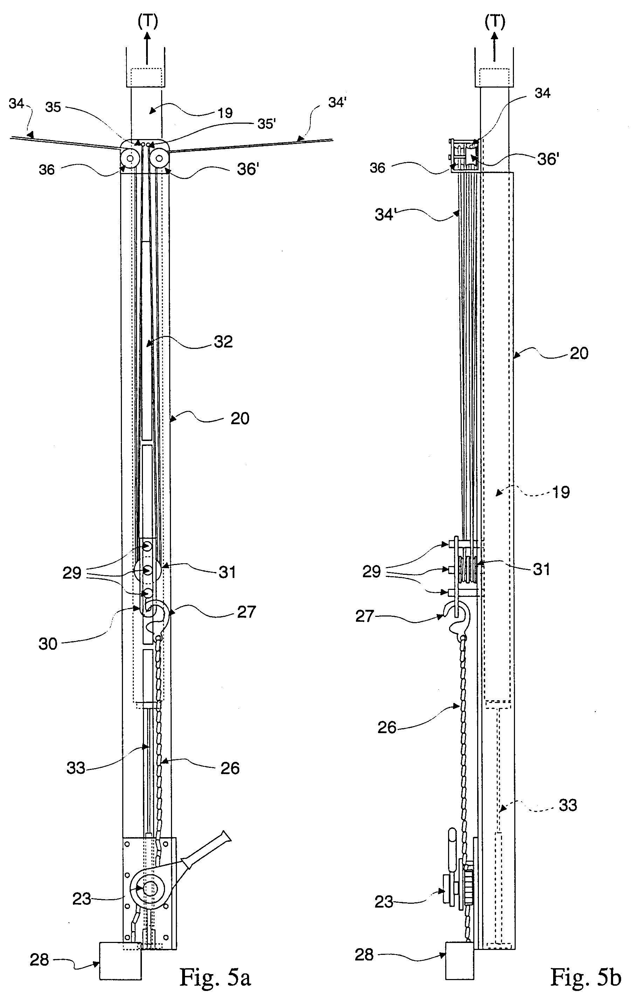

Les mâts d'extrémité (M) comportent également un système à câbles, poulies et manivelles, permettant le levage du coulisseau (19) dans un poteau fixe (20). Les câbles (21, 21') sont reliés aux coins externes des pans latéraux (8, 8'), et s'allongent au fur et à mesure que le coulisseau (19) progresse vers le haut, de sorte que lesdits pans (8, 8') basculent vers la position horizontale. Un système de tension (22, 22') desdits câbles (21, 21') est prévu pour que les pans latéraux (8, 8') soient en position horizontale, câbles (21, 21') tendus, lorsque le coulisseau (19) est en butée supérieure. Le coulisseau (19) est fixé à sa partie supérieure à la toiture centrale (T), et son mouvement est contrôlé par la manivelle (23). L'ensemble de ces systèmes sera expliqué plus en détail en référence aux figures 5a et 5b.

Le fonctionnement général est cependant évident à l'examen des figures schématiques 3 et 4. Le mât d'extrémité (M) est solidarisé au châssis par l'intermédiaire d'une structure en forme de barrière terminale, laquelle comporte en partie arrière (non représentée) un pare-chocs et / ou une rampe pouvant recevoir des accessoires classiques de remorques, tels que des feux arrières de véhicules, etc...

Compte tenu de la légèreté des structures mobiles, le déploiement peut être effectué par des utilisateurs sans dépense d'énergie particulière.

Pour assurer la tenue de la structure déployée, des supports de soutènement (24, 24') sont placés sous les pans inférieurs (8, 8') en position dépliée. Ces supports (24, 24') sont reliés à des tubulures pivotant à partir du cadre desdits pans, dans lesquels elles sont ajustées puis fixées, de préférence par goupillage. Ces tubulures qui pivotent sous leur propre poid se retrouvent verticales lorsque les pans (8, 8') sont horizontaux.

Lesdits supports sont rangés dans la remorque lorsque celle-ci est en configuration repliée. D'autres supports (25, 25') sont fixés à demeure sous le châssis (5) de la remorque auquel ils sont reliés par une liaison pivotante. Ils peuvent également être dépliés et verrouillés en position ouverte pour assurer la stabilité du plancher central.

En référence aux figures 5a et 5b, les deux systèmes permettant le déploiement contrôlé de la scène apparaissent particulièrement clairement, et notamment leur profonde interdépendance.

La manivelle (23) actionne une roue à rochets dans laquelle est prise une chaîne (26) reliée à la partie basse du coulisseau (19) par un crochet terminal (27) inséré dans un orifice adéquat d'une plaque (30) recouvrant au surplus les poulies (31) du coulisseau (19). Ladite chaîne (26) s'entasse dans un boîtier (28) prévu à cet effet en partie basse du poteau fixe (20).

Tout le dispositif qui vient d'être décrit est à l'extérieur dudit poteau fixe (20), la liaison avec le coulisseau (19) étant réalisée par les tiges (29) soudées sur ledit coulisseau (19). Ce dispositif est recouvert par un capot (non représenté) qui le rend invisible aux utilisateurs, exception faite de la manivelle (23). Lesdites tiges sont accessibles de l'extérieur grâce à une lumière longitudinale (32) pratiquée dans le poteau fixe (20), permettant le déplacement du coulisseau (19) et des organes externes qui lui sont reliés.

Le fonctionnement est le suivant :
- lorsque le coulisseau (19) est en position basse, chaque action sur la manivelle (23) libère un tronçon de chaîne, laissant une marge de manoeuvre correspondante au coulisseau (19) qui se déplace d'une distance égale à la longueur de chaîne libérée sous l'action du vérin (33) qui exerce une pression naturelle vers le haut. Dans le même temps, les poulies (31) se déplacent de la même distance et libèrent une portion de câble (34, 34') égale à deux fois cette distance, car lesdits câbles sont doublés entre leurs points fixes (35, 35') et leurs poules (36, 36') respectives. Les pans latéraux inférieurs (8, 8') basculent donc à leurs extrémités de deux fois la distance considérée, selon un arc de cercle autour de l'axe de pivotement.
- lorsque le vérin (33) est en bout de course, les moments exercés par le champ gravitationnel s'appliquant aux pans latéraux inférieurs (8, 8') suffisent pour continuer le mouvement, lequel est cependant toujours contrôlé par la manivelle (23) selon ce qui est décrit ci-dessus : longueur de chaîne libérée = d, hauteur de levage du coulisseau = d, distance curviligne des extrémités desdits pans = 2d.

Dans la première phase, le système énergétique est constitué à la fois par le vérin et le dispositif câble (34, 34') / poulies (36, 36', 31) / points fixes (35, 35'). Dans la seconde phase, seul ce dernier dispositif est en mouvement, actionné par le champ gravitationnel s'appliquant aux pans (8, 8'). Dans les deux cas, la manivelle n'exerce pas d'effort positif, elle se contente de contrôler le mouvement d'ensemble. D'où l'absence d'effort pour l'utilisateur.

La figure 6 montre un détail agrandi de la liaison entre l'arête longitudinale supérieure (37) et le pan supérieur (7). Il ne s'agit pas simplement d'une liaison de pivotement, mais d'une articulation doublée d'un système destiné à absorber des contraintes s'exerçant dans le sens des tubulures (38, 40) représentées.

La rotation du pan supérieur (7) par rapport à la toiture centrale (T) s'exerce en (9), comme cela a déjà été montré en figures 3 et 4. Ce type de liaison de pivotement entre deux structures tubulaires en métal est connu en soi et n'est pas décrit plus en détail. Toutefois, la liaison avec les pans (7) s'effectue à l'aide de tubulures (38) perpendiculaires à l'axe de rotation (9) qui prennent place dans des tubulures (40) des pans latéraux supérieurs (7) dans lesquelles elles sont ajustées coulissantes. Deux lumières (39) longitudinales ont été pratiquées en vis-à-vis dans les tubes (38). Celles-ci reçoivent les arbres de liaison (43), qui peuvent y coulisser. De la sorte, les deux tubulures sont solidarisées et la toiture centrale (T) est reliée aux pans supérieurs (7, 7').

Un mécanisme à ressort (41) s'intercale entre l'extrémité de la tubulure (38) et une butée (42), de préférence constituée d'une poutrelle perpendiculaire faisant partie du cadre des pans (7, 7'). Ce mécanisme est de préférence un simple ressort à boudins (41), tel que schématiquement représenté en figure 6.

Lorsqu'une contrainte s'exerce brutalement sur ces tubulures (38, 40), le ressort l'encaisse et permet de maintenir la bâche tendue quelle que soit la position relative des tubes (38, 40). Ainsi, les ressorts (41) sont en principe relativement comprimés. S'il survient un coup de vent faisant gonfler la bâche (B) vers le haut, le ressort se détend, et la structure absorbe cette surcontrainte, sans danger ni pour ladite structure, ni pour la bâche (B).

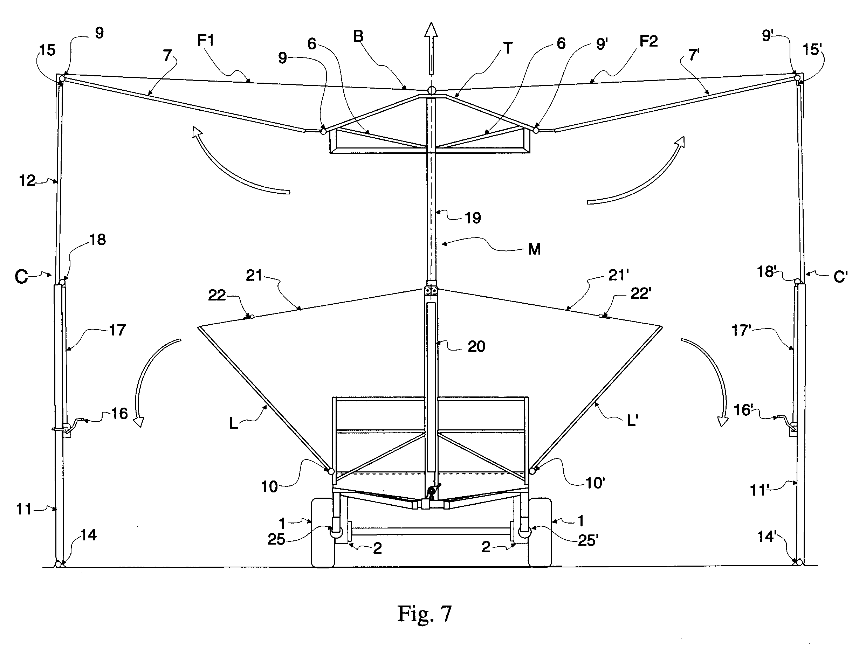

La figure 7 montre la remorque en phase de déploiement. Au cours du montage selon le procédé de l'invention, les étapes se succèdent comme suit :
- pour une première façade latérale (F1), décrochage de deux poteaux télescopiques (C) repliés fixés à la partie inférieure du châssis, basculement manuel du pan supérieur (7) de ladite façade latérale (F1) vers le haut, maintien dudit pan (7) en position relevée à l'aide desdits poteaux (C) disposés sensiblement verticalement sur le sol et fixés aux deux coins extérieurs (15, 15') du pan à relever,
- opération similaire sur la deuxième façade latérale (F2),
- relevage de la toiture centrale (T) et basculement simultané des deux pans (8, 8') inférieurs vers une position horizontale,
- soutènement du pan inférieur (8) à l'aide de supports (24, 25) posés sur le sol et fixés audit pan (8),
- fixation des extrémités inférieures (14) des poteaux télescopiques (C) soutenant le pan supérieur (7) formant auvent latéral, au niveau des coins extérieurs du pan inférieur (8) horizontal,
- même opération sur la seconde façade latérale (F2),
- agrandissement desdits poteaux télescopiques (C) de coin,
- même opération sur la seconde façade latérale (F2).

La figure 7 montre particulièrement la phase intermédiaire dans laquelle les poteaux de coin (C, C') sont posés sur le sol.

Dans cette position, le soutènement des pans latéraux supérieurs (7, 7') se fait par simple arc-boutement desdits poteaux (C, C') sur le sol et par fixation aux coins supérieurs externes. Cette fixation, ainsi que celle des extrémités inférieures (14, 14') des poteaux (C, C') dans la phase ultérieure se fait de préférence par goupillage, les goupilles étant par ailleurs toujours reliées à leurs poteaux par une liaison, par exemple une petite chaîne (non représenté).

De même, les supports de soutènement (24, 25, 24', 25') peuvent être goupillés en position fixe, de manière à faciliter à l'extrême les opérations de verrouillage en position ouverte.

Comme on l'a vu précédemment, les opérations de déploiement de la remorque en un volume scénique sont tellement simples à réaliser qu'elles ne prennent qu'un quart d'heure environ à deux personnes ordinaires, dès lors que la remorque apparaissant en figure 8 a été détachée du véhicule qui la tracte. Celui-ci peut être, comme représenté, un véhicule à quatre roues motrices dont la puissance est amplement suffisante pour tirer une telle remorque, dont la légèreté constitue un des atouts principaux.

## Revendications

1. Véhicule de type remorque pouvant être transformé en un espace scénique développé à partir de l'enveloppe initiale dudit véhicule, laquelle comprend un châssis allongé recouvert d'un plancher central (P), une toiture centrale (T) fixée à au moins deux mâts télescopiques (M) situés aux deux extrémités du véhicule, deux façades latérales (F1, F2) chacune composée de deux pans (7, 7', 8, 8') dont l'un est articulé au niveau de l'arête longitudinale latérale supérieure (9, 9') et l'autre au niveau de l'arête longitudinale latérale inférieure (10, 10'), comportant des moyens permettant d'associer le relèvement du toit et le basculement d'au moins un pan de chaque façade latérale (F1, F2) longitudinale,
caractérisé en ce que lesdits moyens (26 à 36, 34', 35', 36') comprennent deux systèmes mécaniques associés à deux phases séquentielles de déploiement du véhicule, un premier système mécanique amorçant simultanément l'agrandissement des poteaux (M) télescopiques et le basculement latéral d'au moins deux pans symétriques (L, L'), et un second système mécanique achevant l'agrandissement des poteaux télescopiques (M) et le basculement simultané desdits pans latéraux jusqu'à atteindre l'horizontalité, lesdits systèmes étant commandés par au moins un organe de commande manuel (23) réglant l'amplitude du mouvement généré séquentiellement par les deux systèmes à chaque manipulation.

2. Véhicule du type remorque pouvant être transformé en un espace scénique selon la revendication 1, caractérisé en ce que lesdits moyens permettant d'associer simultanément le relèvement de la toiture centrale (T) et le basculement des pans latéraux sont situés dans les mâts télescopiques d'extrémité (M).

3. Véhicule du type remorque pouvant être transformé en un espace scénique, selon l'une des revendications 1 et 2, caractérisé en ce que lesdits moyens permettant d'associer simultanément le relèvement de la toiture centrale (T) et le basculement des pans latéraux réalisent le basculement des pans latéraux inférieurs (8, 8') autour de l'arête longitudinale latérale inférieure (10, 10').

4. Véhicule du type remorque pouvant être transformé en un espace scénique selon l'une quelconque des revendications précédentes, caractérisé en ce que les mâts télescopiques d'extrémité (M) comprennent un poteau (20) fixé au châssis de la remorque et un coulisseau mobile (19) dans ledit poteau fixe (20), lequel comprend à sa partie supérieure un ensemble de deux poulies (36, 36') et de deux plots fixes (35, 35') disposés symétriquement par rapport à l'axe du mât (M), le coulisseau (19) comprenant un jeu de deux poulies coaxiales (31) tournant autour d'un axe situé au niveau de sa partie inférieure.

5. Véhicule du type remorque pouvant être transformé en un espace scénique selon la revendication 4, caractérisé en ce que deux câbles (34, 34') disposés symétriquement par rapport à l'axe du mât télescopique (M) relient les plots fixes (35, 35') du poteau (20) aux pans latéraux inférieurs (8, 8') basculants, va respectivement une desdites poulies (31) du coulisseau (14) et la poulie (36, 36') située en face dudit plot fixe (35, 35') par rapport audit axe de symétrie.

6. Véhicule du type remorque pouvant être transformé en un espace scénique selon la revendication 5, caractérisé en ce que le premier système mécanique amorçant le mouvement simultané de basculement des pans latéraux inférieurs (8, 8') et de levage de la toiture centrale (T) comporte d'une part les deux câbles (34, 34') reliant les plots fixes (35, 35') aux pans latéraux (8, 8') va lesdites poulies (36, 36', 31) et d'autre part un dispositif du type ressort (33) exerçant une force de rappel vers le haut et placé sous le coulisseau (19).

7. Véhicule du type remorque pouvant être transformé en un espace scénique selon la revendication 6, caractérisé en ce que le dispositif mécanique exerçant la force de rappel est un vérin à gaz (33).

8. Véhicule du type remorque pouvant être transformé en un espace scénique selon la revendication 5, caractérisé en ce que le second système mécanique comporte uniquement les deux câbles (34, 34') reliant les pots fixes (35, 35') du poteau fixe (20) aux pans latéraux inférieurs (8, 8') via les poulies (31) du coulisseau (19) et les poulies (36, 36') dudit poteau fixe (20), ce second système fonctionnant au moyen de l'énergie communiquée par la force de gravité s'appliquant auxdits pans inférieurs (8, 8').

9. Véhicule du type remorque pouvant être transformé en un espace scénique selon l'une quelconque des revendications précédentes, caractérisé en ce que l'organe de commande manuel est une manivelle (23) actionnant une roue à rochets sur laquelle est en prise une chaîne (26) dont l'une des extrémités est fixée à la partie inférieure du coulisseau (19).

10. Véhicule du type remorque pouvant être transformé en un espace scénique selon l'une quelconque des revendications précédentes, caractérisé en ce que le coulisseau (19) est verrouillé dans ses deux positions extrêmes à l'aide d'une goupille coopérant avec des orifices du poteau (20) et des orifices du coulisseau (19).

11. Véhicule du type remorque pouvant être transformé en un espace scénique selon l'une quelconque des revendications précédentes, caractérisé en ce que les pans latéraux supérieurs (7, 7') sont fixés à l'arête longitudinale latérale supérieure (9, 9') de la toiture centrale (T) au moyen d'un système permettant d'absorber des efforts dont au moins une des composantes est située dans le plan desdits pans latéraux supérieurs (7, 7').

12. Véhicule du type remorque pouvant être transformé en un espace scénique selon la revendication 11, caractérisé en ce que ledit système comprend d'une part des tubulures (38) articulées à l'arête longitudinale latérale (9) de la toiture centrale (T), dotées de deux lumières longitudinales (39) se faisant face et d'autre part des ressorts (41) placés dans des tubes (40) desdits pans latéraux (7, 7') dans lesquelles s'ajustent lesdites tubulures (38) articulées, lesdits ressorts (41) venant en butée à l'une de leurs extrémités contre l'extrémité des tubulures articulées (38) et à l'autre de leurs extrémités contre une butée (42) interne au tube, la liaison entre les tubulures articulées (38) et les tubes (40) des pans latéraux (7, 7') étant réalisée à chaque liaison à l'aide d'un arbre transversal (43) fixé audit tube et coulissant dans lesdites lumières (39).

13. Véhicule du type remorque pouvant être transformé en un espace scénique selon l'une quelconque des revendications précédentes, caractérisé en ce que les coins externes du pan supérieur (7, 7') et les coins externes du pan inférieur (8, 8') de la même façade latérale sont reliés par des poteaux télescopiques (C, C') dont la taille est réglable à l'aide d'un système à câble (17, 17') et au moins une poulie (18, 18') opérable manuellement au moyen d'une manivelle (16, 16') coopérant avec une roue à rochets.

14. Véhicule du type remorque pouvant être transformé en un espace scénique selon la revendication 13, caractérisé en ce que lesdits poteaux télescopiques (C, C') sont fixés à l'aide de goupilles, coopérant avec des orifices situés d'une part à ses extrémités (14, 14', 15, 15') et d'autre part dans des logements correspondants des pans latéraux (7, 7', 8, 8').

15. Procédé de montage rapide d'un espace scénique à partir d'un véhicule de type remorque comprenant un châssis allongé recouvert d'un plancher central (P), une toiture centrale (T) fixée à au moins deux mâts télescopiques (M) située aux deux extrémités dudit plancher central (P), deux façades latérales (F1, F2) composées chacune des deux pans (7, 7', 8, 8') dont l'un est articulé au niveau de l'arête longitudinale latérale inférieure (10, 10') et l'autre est articulé au niveau de l'arête longitudinale latérale supérieure (9, 9'), caractérisé en ce qu'il comprend les étapes successives suivantes :
- pour une première façade latérale (F1), décrochage de deux poteaux télescopiques (C) repliés arrimés au châssis, basculement manuel du pan supérieur (7) de ladite façade latérale vers le haut, maintien dudit pan en position relevée à l'aide desdits poteaux (C) de coin disposés sensiblement verticalement sur le sol et fixés aux deux coins extérieurs du pan (7) à relever,
- opération similaire sur la deuxième façade latérale (F2),
- relevage de la toiture centrale (T) et basculement simultané des deux pans inférieurs (8, 8') vers une position horizontale,
- soutènement du pan inférieur (8) d'une façade latérale (F1) à l'aide de supports (24) posés sur le sol et fixés audit pan inférieur (8),
- fixation des extrémités inférieures (14) des poteaux télescopiques (C) soutenant le pan supérieur (7) formant auvent latéral sur les coins extérieurs dudit pan inférieur (8) en position horizontale,
- mêmes opérations sur la seconde façade latérale (F2),
- relevage desdits poteaux télescopiques (C) de coin,
- même opération sur la seconde façade latérale (F2).

16. Procédé de montage rapide d'un espace scénique à partir d'un véhicule de type remorque, caractérisé en ce que le relevage de la toiture centrale (T) et le basculement simultané des pans latéraux inférieurs (8, 8') sont réalisés manuellement à l'aide de manivelles (23) commandant l'amplitude du mouvement généré à chaque manipulation, et situés à la partie inférieure de chaque mât télescopique (M).

17. Procédé de montage rapide d'un espace scénique à partir d'un véhicule de type remorque selon l'une des revendications 15 et 16, caractérisé en ce que les fixations des supports de soutènement (24, 25, 24', 25') des pans latéraux inférieurs (8, 8') en position horizontale, des poteaux télescopiques (C, C') de coins à leurs extrémités inférieures (14, 14') et supérieures (15, 15') et des coulisseaux (19, 12, 12') de tous les poteaux (C, C') et mâts télescopiques (M) dans leurs positions extrêmes sont réalisés par goupillage.

## Claims

1. Trailer vehicle capable of being converted into a theatrical space deployed from the initial envelope of the said vehicle, which comprises a lengthened chassis covered by a central floor (P), a central roof (T) fixed to at least two telescopic masts (M) situated at the two ends of the vehicle, two lateral faces (F1, F2), each composed of two sections (7, 7', 8, 8') one of which is hinged at the upper lateral longitudinal ridge (9, 9') and the other at the lower lateral longitudinal ridge (10, 10'), including devices for associating the lifting of the roof with the swinging movement of at least one section of each lateral longitudinal face (F1, F2),
characterised by the fact that the said devices (26 to 36, 34', 35', 36') include two mechanical systems associated with two sequential phases of the unfolding of the vehicle, a first mechanical system simultaneously initiating the extension of the telescopic masts (M) and the lateral swinging of at least two symmetrical sections (L, L') and a second mechanical system completing the extension of the telescopic masts (M) and the simultaneous swinging of the said lateral sections to the horizontal, the said systems being controlled by at least one manual control (23) regulating the amplitude of the movement generated sequentially by the two systems at each manipulation.

2. Trailer vehicle capable of being converted into a theatrical space according to claim 1, characterised by the fact that the said devices to associate simultaneously the raising of the central roof (T) and the swinging movement of the lateral sections are situated in the end telescopic masts (M).

3. Trailer vehicle capable of being converted into a theatrical space according to claims 1 or 2, characterised by the fact that the said devices to associate simultaneously the raising of the central roof (T) and the swinging movement of the lateral sections produce the swinging movement of the lower lateral sections (8, 8') around the lower lateral longitudinal ridge (10, 10').

4. Trailer vehicle capable of being converted into a theatrical space according to any of the above claims, characterised by the fact that the end telescopic masts (35, 35') include a post (20) fixed to the chassis of the trailer and a moving slider (19) in the said fixed post (20) whose upper section includes an assembly of two pulleys (36, 36') and two fixed pegs arranged symmetrically in relation to the axis of the mast (M), the slider (19) including a set of two coaxial pulleys (31) rotating around a shaft situated in its lower section.

5. Trailer vehicle capable of being converted into a theatrical space according to claim 4, characterised by the fact that two cables (34, 34') arranged symmetrically in relation to the to the axis of the telescopic mast (M) link the fixed pegs (35, 35') of the post (20) to the lower lateral swinging sections (8, 8'), via respectively one of the said pulleys (31) of the slider (14) and the pulley (36, 36') situated opposite the said fixed peg (35, 35') in relation to the axis of symmetry.

6. Trailer vehicle capable of being converted into a theatrical space according to claim 5, characterised by the fact that the first mechanical system initiating the simultaneous swinging movement of the lower lateral sections (8, 8') and the raising of the central roof (T) includes firstly the two cables (34, 34') linking the fixed pegs (35, 35') to the lateral sections (8, 8') via the said pulleys (36, 36', 31) and secondly a spring device (33) exercising an upwards return force and positioned under the slider (19).

7. Trailer vehicle capable of being converted into a theatrical space according to claim 6, characterised by the fact that the mechanical device exerting the return force is a gas strut (33).

8. Trailer vehicle capable of being converted into a theatrical space according to claim 6, characterised by the fact that the second mechanical system comprises only the two cables (34, 34') linking the fixed pegs (35, 35') of the fixed post (20) to the lower lateral sections (8, 8') via the pulleys (31) of the slider (19) and the pulleys (36, 36') of the said fixed post (20), this second system operating by means of the energy communicated by the force of gravity acting on the said lower sections (8, 8').

9. Trailer vehicle capable of being converted into a theatrical space according to any of the above claims, characterised by the fact that the manual control device is a handle (23) operating a ratchet wheel on which is positioned a chain (26), one extremity of which is fixed to the lower part of the slider (19).

10. Trailer vehicle capable of being converted into a theatrical space according to any of the above claims, characterised by the fact that the slider (19) is locked in its two extreme positions by means of a pin working in association with holes in the post (20) and holes in the slider (19).

11. Trailer vehicle capable of being converted into a theatrical space according to any of the above claims, characterised by the fact that the upper lateral sections (7, 7') are fixed to the upper lateral longitudinal ridge (9, 9') of the central roof (T) by a system allowing loads to be absorbed of which at least one component is situated in the plane of the said upper lateral sections (7, 7').

12. Trailer vehicle capable of being converted into a theatrical space according to any of the above claims, characterised by the fact that the said system includes tubes (38) hinged at the lateral longitudinal ridge (9) of the central roof (T), having two longitudinal openings (39) opposite each other, and springs (41) placed in tubes (40) of the said lateral sections (7, 7') into which the said hinged tubes fit. The springs (41) come to a stop at one of their extremities against the end of the hinged tubes (38), and at their other extremities against a stop (42) inside the tube, the link between the hinged tubes (38) and the tubes (40) of the lateral sections (7, 7') being provided at each connection by means of a transversal rod (43) fixed to the said tube and sliding in the said openings (39).

13. Trailer vehicle capable of being converted into a theatrical space according to any of the above claims, characterised by the fact that the outer corners of the upper section (7, 7') and the outer corners of the lower section (8, 8') of the same lateral face are linked by telescopic poles (C, C') whose size is adjustable by means of a cable system (17, 17') and at least one pulley (18, 18') which can be operated manually by a handle (16, 16') working in association with a ratchet wheel.

14. Trailer vehicle capable of being converted into a theatrical space according to claims 13 above, characterised by the fact that the said telescopic poles (C, C') are fixed by means of pins associated with holes situated at its extremities (14, 14', 15, 15') and in the corresponding positions in the lateral sections (7, 7', 8, 8').

15. Procedure for rapid erection of a theatrical space from a trailer vehicle including an extended chassis covered by a central floor (P), a central roof (T) fixed to at least two telescopic masts (M) situated at the two ends of the said floor (P), two lateral faces (F1, F2) each composed of two sections (7, 7', 8, 8') of which one is hinged around the lower lateral longitudinal ridge (10, 10') and the other is hinged around the upper lateral longitudinal ridge (9, 9'), characterised in that it comprises the following successive stages:
- for a first lateral face (F1), release of two telescopic posts (C) folded and lashed to the chassis, manual upwards deployment of the upper section (7) of the said lateral surface, holding of the said section in the raised position by means of the said corner posts (C) placed approximately vertically on the ground and fixed to the two outer corners of the section (7) to be raised,
- similar operation for the second lateral face (F2),
- raising of the central roof (T) and simultaneous swinging of the two lower sections (8, 8') to a horizontal position,
- bracing of the lower section (8) of one lateral surface (F1) by means of supports (24) resting on the ground and fixed to the said lower section (8),
- fixing in a horizontal position of the lower extremities (14) of the telescopic poles (C) bracing the upper section (7) forming a lateral canopy on the outer corners of the said lower section (8),
- same operations on the second lateral face (F2),
- raising of the said telescopic corner poles (C),
- same operation on the second lateral face (F2),

16. Procedure for the rapid erection of a theatrical space from a trailer vehicle, characterised by the fact that the lifting of the central roof (T) and the simultaneous swinging movement of the lower lateral sections (8, 8') are performed manually by means of handles (23) which control the amplitude of the movement generated at each manipulation and are situated on the lower part of each telescopic mast (M).

17. Procedure for the rapid erection of a theatrical space from a trailer vehicle according to either of claims 15 and 16, characterised by the fact that the fixing of the bracing supports (24, 25, 24', 25') of the lower lateral sections (8, 8') in a horizontal position, of the telescopic corner poles (C, C') at their lower extremities (14, 14') and upper extremities (15, 15') and of the sliders (19, 12, 12') and of all the poles (C, C') and telescopic masts (M) in their extreme positions is achieved by means of pins.

## Patentansprüche

1. Anhängerfahrzeug, das in einen Bühnenraum umgewandelt werden kann, der aus dem ursprünglichen Gehäuse des Fahrzeugs geschaffen wird, wobei das Gehäuse versehen ist mit einem langgestreckten Rahmen, der von einem zentralen Boden (P) bedeckt ist, einem zentralen Dach (T), das an wenigstens zwei Teleskopmasten (M) befestigt ist, die sich an den beiden Enden des Fahrzeugs befinden, und zwei Seitenflächen (F1, F2), wovon jede aus zwei Wänden (7, 7', 8, 8') zusammengesetzt ist, wovon eine auf Höhe der oberen longitudinalen Seitenkante (9, 9') und die andere auf Höhe der unteren longitudinalen Seitenkante (10, 10') angelenkt ist, wobei Mittel vorgesehen sind, die ermöglichen, das Anheben des Dachs und die Schwenkung wenigstens einer Wand jeder longitudinalen Seitenfläche (F1, F2) zu verbinden,
dadurch gekennzeichnet, daß die Mittel (26 bis 36, 34', 35', 36') zwei mechanische Systeme enthalten, die zwei aufeinanderfolgenden Phasen des Ausklappens des Fahrzeugs zugeordnet sind und wovon ein erstes mechanisches System gleichzeitig die Vergrößerung der Teleskoppfosten (M) und die seitliche Kippung wenigstens zweier symmetrischer Wände (L, L') beginnt und ein zweites mechanisches System die Vergrößerung der Teleskoppfosten (M) und die gleichzeitige Kippung der Seitenwände bis zum Erreichen einer horizontalen Lage beendet, wobei die Systeme durch wenigstens ein Handsteuerelement (23) gesteuert werden, das die Amplitude der von den zwei Systemen nacheinander erzeugten Bewegung bei jeder Betätigung steuert.

2. Anhängerfahrzeug nach Anspruch 1, das in einen Bühnenraum umgewandelt werden kann, dadurch gekennzeichnet, daß sich die Mittel, die eine Verbindung ermöglichen, um gleichzeitig das zentrale Dach (T) anzuheben und die Seitenwände zu kippen, in den End-Teleskopmasten (M) befinden.

3. Anhängerfahrzeug nach Anspruch 1 und 2, das in einen Bühnenraum umgewandelt werden kann, dadurch gekennzeichnet, daß die Mittel, die eine Verbindung ermöglichen, um gleichzeitig das zentrale Dach (T) anzuheben und die Seitenwände zu kippen, die Kippung der unteren Seitenwände (8, 8') um die untere longitudinale Seitenkante (10, 10') bewerkstelligen.

4. Anhängerfahrzeug nach irgendeinem der vorangehenden Ansprüche, das in einen Bühnenraum umgewandelt werden kann, dadurch gekennzeichnet, daß die End-Teleskopmasten (M) einen am Rahmen des Anhängers befestigten Pfosten (20) und einen beweglichen Schlitten (19) im festen Pfosten (20) umfassen, wobei der feste Pfosten (20) in seinem oberen Teil eine Einheit aus zwei Rollen (36, 36') und zwei festen Führungen (35, 35), die in bezug auf die Achse des Masten (M) symmetrisch angeordnet sind, enthält, wobei der Schlitten (19) einen Satz aus zwei koaxialen Rollen (31) enthält, die sich um eine auf Höhe seines unteren Teils befindliche Achse drehen.

5. Anhängerfahrzeug nach Anspruch 4, das in einen Bühnenraum umgewandelt werden kann, dadurch gekennzeichnet, daß zwei Seile (34, 34'), die in bezug auf die Achse des Teleskopmasts (M) symmetrisch angeordnet sind, die festen Führungen (35, 35') des Pfostens (20) mit den unteren kippbaren Seitenwänden (8, 8') über die Rollen (31) des Schlittens (14) und über die Rollen (36, 36'), die sich in bezug auf die Symmetrieachse gegenüber der festen Führung (35, 35') befinden, verbinden.

6. Anhängerfahrzeug nach Anspruch 5, das in einen Bühnenraum umgewandelt werden kann, dadurch gekennzeichnet, daß das erste mechanische System, das die gleichzeitige Bewegung zum Kippen der unteren Seitenwände (8, 8') und zum Anheben des zentralen Dachs (T) beginnt, einerseits die zwei Seile (34, 34'), die die festen Führungen (35, 35') mit den Seitenwänden (8, 8') über die Rollen (36, 36', 31) verbinden, und andererseits eine Federeinrichtung (33), die eine Rückstellkraft nach oben ausübt und unter dem Schlitten (19) angeordnet ist, enthält.

7. Anhängerfahrzeug nach Anspruch 6, das in einen Bühnenraum umgewandelt werden kann, dadurch gekennzeichnet, daß die mechanische Einrichtung, die die Rückstellkraft ausübt, ein Gaszylinder (33) ist.

8. Anhängerfahrzeug nach Anspruch 5, das in einen Bühnenraum umgewandelt werden kann, dadurch gekennzeichnet, daß das zweite mechanische System ausschließlich die zwei Seile (34, 34') enthält, die die festen Führungen (35, 35') des festen Pfostens (20) mit den unteren Seitenwänden (8, 8') über die Rollen (31) des Schlittens (19) und die Rollen (36, 36') des festen Pfostens (20) verbinden, wobei dieses zweite System mittels der Energie arbeitet, die von der auf die unteren Wände (8, 8') wirkenden Schwerkraft geliefert wird.

9. Anhängerfahrzeug nach irgendeinem der vorangehenden Ansprüche, das in einen Bühnenraum umgewandelt werden kann, dadurch gekennzeichnet, daß das Handsteuerelement eine Kurbel (23) ist, die ein Zahnrad betätigt, um das eine Kette (26) verläuft, wovon eines der Enden am unteren Teil des Schlittens (19) befestigt ist.

10. Anhängerfahrzeug nach irgendeinem der vorangehenden Ansprüche, das in einen Bühnenraum umgewandelt werden kann, dadurch gekennzeichnet, daß der Schlitten (19) in seinen zwei Extrempositionen mit Hilfe eines Stifts verriegelt wird, der mit Öffnungen des Pfostens (20) und Öffnungen des Schlittens (19) zusammenwirkt.

11. Anhängerfahrzeug nach irgendeinem der Ansprüche, das in einen Bühnenraum umgewandelt werden kann, dadurch gekennzeichnet, daß die oberen Seitenwände (7, 7') an der oberen longitudinalen Seitenkante (9, 9') des zentralen Daches (T) mittels eines Systems befestigt sind, das die Absorption von Kräften ermöglicht, wovon wenigstens eine der Komponenten in der Ebene der oberen Seitenwände (7, 7') liegt.

12. Anhängerfahrzeug nach Anspruch 11, das in einen Bühnenraum umgewandelt werden kann, dadurch gekennzeichnet, daß das System einerseits Rohrstutzen (38), die an der longitudinalen Seitenkante (9) des zentralen Dachs (T) angelenkt sind und mit zwei einander zugewandten longitudinalen Langlöchern (39) versehen sind, und andererseits Federn (41) enthält, die in Rohren (40) der Seitenwände (7, 7') angeordnet sind, in die die angelenkten Rohrstutzen (38) eingepaßt sind, wobei die Federn (41) mit einem ihrer Enden am Ende der angelenkten Rohrstutzen (38) und mit dem anderen ihrer Enden an einem internen Anschlag (42) des Rohrs anschlagen, wobei die Verbindung zwischen den angelenkten Rohrstutzen (38) und den Rohren (40) der Seitenwände (7, 7') an jeder Verbindung mit Hilfe einer transversalen Welle (43) erfolgt, die an dem Rohr befestigt ist und in den Langlöchern (39) gleitet.

13. Anhängerfahrzeug nach irgendeinem der Ansprüche, das in einen Bühnenraum umgewandelt werden kann, dadurch gekennzeichnet, daß die äußeren Ecken der oberen Wand (7, 7') und die äußeren Ecken der unteren Wand (8, 8') derselben Seitenwand über Teleskoppfosten (C, C') verbunden sind, deren Größe mit Hilfe eines Seilsystems und wenigstens einer Rolle (18, 18'), die von Hand mittels einer mit einem Zahnrad zusammenwirkenden Kurbel (16, 16') betätigbar ist, einstellbar ist.

14. Anhängerfahrzeug nach Anspruch 13, das in einen Bühnenraum umgewandelt werden kann, dadurch gekennzeichnet, daß die Teleskoppfosten (C, C') mit Hilfe von Stiften befestigt sind, die mit den Öffnungen zusammenwirken, die sich einerseits an ihren Enden (14, 14', 15, 15') und andererseits in entsprechenden Aufnahmesitzen der Seitenwände (7, 7', 8, 8') befinden.

15. Verfahren zum schnellen Aufbau eines Bühnenraums ausgehend von einem Anhängerfahrzeug, das versehen ist mit einem langgestreckten Rahmen, der von einem zentralen Boden (P) bedeckt ist, einem zentralen Dach (T), das an wenigstens zwei Teleskopmasten (M) befestigt ist, die sich an den beiden Enden des zentralen Bodens (P) befinden, zwei Seitenflächen (F1, F2), wovon jede aus zwei Wänden (7, 7', 8, 8') zusammengesetzt ist, wovon eine auf Höhe der unteren longitudinalen Seitenkante (10, 10') und die andere auf Höhe der oberen longitudinalen Seitenkante (9, 9') angelenkt ist, dadurch gekennzeichnet, daß es die folgenden aufeinanderfolgenden Schritte enthält:
- für eine erste Seitenfläche (F1) Lösen der zwei im Rahmen verstauten, umgeklappten Teleskoppfosten (C), manuelles Kippen der oberen Wand (7) der Seitenfläche nach oben, Halten der Wand in der angehobenen Position mit Hilfe der zwei Eckpfosten (C), die im wesentlichen vertikal auf dem Boden angeordnet sind und an den zwei äußeren Ecken der anzuhebenden Wand (7) befestigt sind,
- gleiche Operation für die zweite Seitenfläche (F2),
- Anheben des zentralen Dachs (T) und gleichzeitig Kippen der zwei unteren Wände (8, 8') in eine horizontale Lage,
- Abstützen der unteren Wand (8) einer Seitenfläche (F1) mit Hilfe von Trägern (24), die auf den Boden gestellt und an der unteren Wand (8) befestigt sind,
- Befestigen der unteren Enden (14) der Teleskoppfosten (C), die die ein seitliches Vordach bildende obere Wand (7) abstützen, an den äußeren Ecken der in einer horizontalen Lage befindlichen unteren Wand (8),
- gleiche Operationen an der zweiten Seitenfläche (F2),
- Anheben der Eck-Teleskoppfosten (C),
- gleiche Operation an der zweiten Seitenfläche (F2).

16. Verfahren zum schnellen Aufbau eines Bühnenraums ausgehend von einem Anhängerfahrzeug, dadurch gekennzeichnet, daß das Anheben des zentralen Dachs (T) und die gleichzeitige Kippung der unteren Seitenwände (8, 8') manuell mit Hilfe von Kurbeln (23) erfolgen, die die Amplitude der bei jeder Betätigung erzeugten Bewegung steuern und die sich im unteren Teil jedes Teleskopmasts (M) befindet.

17. Verfahren zum schnellen Aufbau eines Bühnenraums ausgehend von einem Anhängerfahrzeug nach irgendeinem der Ansprüche 15 und 16, dadurch gekennzeichnet, daß die Befestigungen der Abstützträger (24, 25, 24', 25') der unteren Seitenwände (8, 8') in der horizontalen Lage, der Eck-Teleskoppfosten (C, C') an ihren unteren Enden (14, 14') und ihren oberen Enden (15, 15'), der Schlitten (19, 12, 12') sämtlicher Pfosten (C, C') und der Teleskopmasten (M) in ihren Extrempositionen durch Stifte erfolgen.
